Europäisches Patentamt

European Patent Office

Office européen des brevets

(11) Veröffentlichungsnummer: **0 182 028**
**B1**

(12) **EUROPÄISCHE PATENTSCHRIFT**

(45) Veröffentlichungstag der Patentschrift:
**31.01.90**

(51) Int. Cl.⁴: **B 29 D 30/24**

(21) Anmeldenummer: **85111711.9**

(22) Anmeldetag: **17.09.85**

(54) **Reifenaufbaumaschine.**

(30) Priorität: **20.11.84 DE 3442302**

(43) Veröffentlichungstag der Anmeldung:
**28.05.86 Patentblatt 86/22**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
**FR-A- 2 084 019**
**US-A- 4 010 058**
**US-A- 4 203 794**

(73) Patentinhaber: **Continental Aktiengesellschaft,
Königsworther Platz 1, D-3000 Hannover 1 (DE)**

(72) Erfinder: **Menell, Hans, Dipl.-Ing.,
Heinrich-Hoff-Strasse 14, D-3000 Hannover 91 (DE)**
Erfinder: **Ringhoff, Hubert, Dipl.-Ing., Eichenweg 12,
D-3016 Seelze 2 (DE)**
Erfinder: **Rump, Jürgen, Dipl.-Ing.,
Anton-Freytag-Strasse 16, D-3008 Garbsen (DE)**

**Beschreibung**

Die Erfindung bezieht sich auf Reifenaufbaumaschinen, mit einer auf einer Antriebswelle auswechselbar angebrachten Aufbautrommel und gegen deren Stirnenden sich abstützenden Arbeits- und Steuerelementen. Eine derartige Reifenaufbaumaschine ist beispielsweise aus der US-A 4 010 058 bekannt.

Die als Hilfseinrichtungen bekannter Aufbaumaschinen der eigentlichen Wickeltrommel zugeordneten verschiedenen Arbeits- und Steuerelemente wie z.B. Kernanleger, Endschalter, Steuernocken, pneumatische Schaltgeräte u. dgl. sind in symmetrischer Paarung stets auf die Trommelmitte als fiktive Bezugsebene auszurichten, um bei weitgehend selbsttätigem Ablauf der aufeinanderfolgenden Aufbauschritte ein einwandfreies Arbeitsergebnis zu sichern. Dies lässt sich mit der notwendigen Genauigkeit im allgemeinen ohne besondere Schwierigkeiten durch unmittelbares Anlaufen der axial beweglichen Elemente an die feststehenden Stirnenden der durchmesserveränderlichen Aufbautrommel erreichen. Eine gewisse Problematik ergibt sich dabei aber aus der häufig vorgesehenen Möglichkeit, Aufbautrommeln verschiedener Breitenabmessungen wechselweise in ein und derselben Maschine einzusetzen und diese nach Bedarf für die Herstellung verschiedener Reifentypen umzurüsten. Da alle Trommeln aus Passungs- und Montagegründen mit einer nach allgemein verbindlichen Normen bemessenen Nabe ausgebildet sind, stellen sich nach jedem Trommelwechsel Unterschiede in den Abstandsmassen der äusseren Trommelsegmente ein, die ein erneutes Ausrichten der Arbeits- und Steuerelemente auf die veränderte Bezugsgrösse notwendig machen. Der Erfindung liegt als Aufgabe zugrunde, den mit dem Verstellen der einzelnen Anschläge verbundenen hohen Arbeitsaufwand drastisch zu vermindern und als Folge davon den Trommelaustausch zu vereinfachen und zu beschleunigen.

Zum Lösen dieser Aufgabe ist in Reifenaufbaumaschinen der eingangs geschilderten Gattung gemäss der Erfindung die Aufbautrommel beiderseits mit die Stützkräfte der Arbeits- und Steuerelemente aufnehmenden Anschlaghülsen versehen, wobei die Anschlaghülsen zweckmässig in konzentrischer Anordnung zu der Antriebswelle drehfest mit der Aufbautrommel verbunden sind. In praktischer Ausführung des Erfindungsgedankens sind Anschlaghülsen verschiedener axialer Länge vorgesehen und in Verbindung mit der Aufbautrommel gegeneinander auswechselbar.

Die Erfindung schafft mit überraschend einfachen Mitteln die Voraussetzungen für einen problemlosen Austausch der Aufbautrommeln. Durch Anbringen zweckentsprechend bemessener zusätzlicher Hülsen beiderseits der Trommeln lässt sich das für die richtige Maschineneinstellung entscheidende Abstandsmass zwischen der Trommelnabe und der äusseren Stirnkante der Trommelsegmente ohne weiteres Zutun stets auf dem vorgegebenen Wert halten. Da sich die beweglichen Arbeits- und Steuermittel gegen diese Hülsen abstützen, haben sie infolgedessen ihre Schaltstellung in allen Fällen in gleichbleibend genauer Ausrichtung zur Trommelmitte als der Bezugsebene erreicht, so dass jede Notwendigkeit zum Einzeleinrichten entfällt. Jeder Typen- und Dimensionswechsel im Fertigungsprogramm kann daher schnell und leicht durch einfaches Austauschen der Aufbautrommel mit ihren zugehörigen Abstandshülsen ohne weitere Einstellungsarbeiten vorgenommen werden. Die erheblich verkürzten Rüstzeiten ermöglichen im Endeffekt einen bedeutend höheren Arbeitsausstoss ohne Mehraufwand.

Die Erfindung ist anhand der schematischen Darstellung eines Ausführungsbeispiels in der Zeichnung verdeutlicht. In der Zeichnung ist:

Fig. 1 das auf die Antriebsseite beschränkte Anordnungsschema einer Reifenaufbaumaschine und

Fig. 2 eine Einzelheit aus Fig. 1 in Querschnittsdarstellung in vergrössertem Massstab.

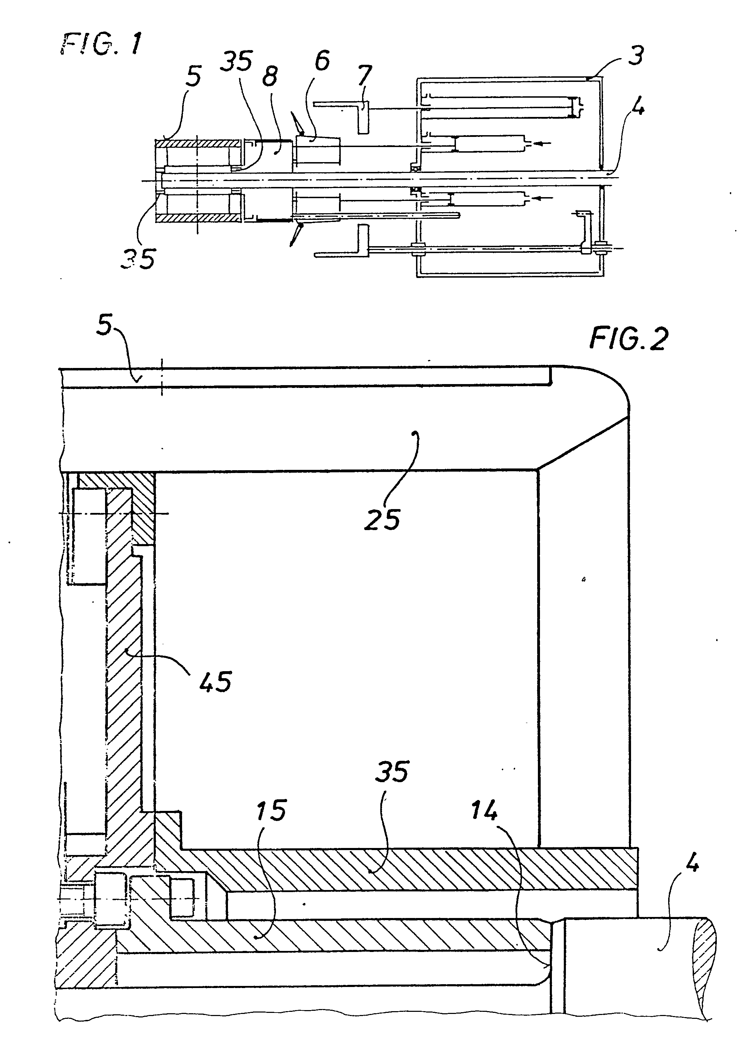

Die in Fig. 1 gezeichnete Aufbaumaschine enthält einen ortsfesten Antriebskasten 3 mit einem nicht weiter dargestellten regel- und umsteuerbaren Hauptantriebsmotor, der auf die in dem Antriebskasten gelagerte und einseitig aus diesem herausgeführte Antriebswelle 4 für die drehfest auf dieser angebrachte Aufbautrommel 5 einwirkt. Der Antriebskasten trägt weiterhin die mit dem Fortgang der Aufbauarbeiten benötigten verschiedenen Arbeits- und Steuerelemente wie z.B. Kernbeladevorrichtungen 6, Kernsetzringe mit Umbugglocken 7, Balgträger 8 u. dgl., deren paarige Gegenstücke mit den zugehörigen Betätigungseinrichtungen in einem dem Antriebskasten 3 weitgehend gleichartigen nichtgezeichneten Verschiebekasten auf der anderen Seite der Aufbautrommel 5 vorgesehen sind. Die in bekannter Weise durchmesserveränderliche Aufbautrommel ist mit kraftschlüssiger Anlage der Trommelnabe 15 an einer Schulter 14 der Antriebswelle 4 in drehfester Verbindung auf diese aufgeschoben, wie es die Teildarstellung eines Endabschnittes der Trommel in Fig. 2 erkennen lässt, und kann nach Bedarf gegen eine andere Trommel anderer Breitenabmessungen ihrer radial verstellbaren Aussensegmente 25 ausgetauscht werden.

Die in jedem Falle mit einer Änderung der Trommelbreite einhergehende Änderung in der Axialausrichtung der Bezugsebene für die Arbeits- und Steuerelemente wird erfindungsgemäss durch Ansetzen von Abstandshülsen 35 an die Stirnwände 45 der Aufbautrommel 5 aufgehoben. Die mit nichtgezeichneten Mitteln an der Stirnwand befestigten Abstandshülsen umfassen die Antriebswelle 4 berührungsfrei in konzentrischer Ausrichtung zu ihr und bilden eine von der masslich auf die Schulter 14 der Antriebswelle festgelegten Trommelnabe 15 unabhängig, in den Bereich der Randebene der Segmente 25 führende Verlängerung der Trommel, gegen die sich die Arbeits- und Steuerelemente unmittelbar in stets gleichbleibender Orientierung zur Trommelmitte abstützen können.

**Patentansprüche**

1. Reifenaufbaumaschine, mit einer auf einer Antriebswelle (4) auswechselbar angebrachten Aufbautrommel (5) und gegen deren Stirnenden sich abstützenden Arbeits- und Steuerelementen (6, 7, 8), dadurch gekennzeichnet, dass die Aufbautrommel (5) beiderseits mit die Stützkräfte der Arbeits- und Steuerelemente (6, 7, 8) aufnehmenden Anschlaghülsen (35) versehen ist.

2. Maschine nach Anspruch 1, dadurch gekennzeichnet, dass die Anschlaghülsen (35) in konzentrischer Anordnung zu der Antriebswelle (4) drehfest mit der Aufbautrommel (5) verbunden sind.

3. Maschine nach den Ansprüchen 1 und 2, dadurch gekennzeichnet, dass Anschlaghülsen (35) verschiedener axialer Länge vorgesehen und in Verbindung mit der Aufbautrommel (5) gegeneinander auswechselbar sind.

4. Maschine nach den Ansprüchen 1 bis 3, gekennzeichnet durch eine solche Längenbemessung der Anschlaghülsen (35), dass deren freie Stirnfläche jeweils mit der äusseren Kantenbegrenzungsebene der Umfangssegmente (25) der zugehörigen Aufbautrommel (5) im wesentlichen zusammenfällt.

**Revendications**

1. Machine de confectionnement de pneumatiques, comportant un tambour de confectionnement (5) monté de façon amovible sur un arbe d'entraînement (4) et contre les extrémités frontales duquel s'appuient des éléments de travail et de commande (6, 7, 8), caractérisée en ce que le tambour de confectionnement (5) est pourvu des deux côtés de fourreaux de butée (35) absorbant les forces d'appui des éléments de travail et de commande (6, 7, 8).

2. Machine selon la revendication 1, caractérisée en ce que les fourreaux de butée (35) sont reliés de façon non tournante au tambour de confectionnement (5) en étant disposés concentriquement à l'arbre d'entraînement (4).

3. Machine selon les revendications 1 et 2, caractérisée en ce qu'il est prévu des fourreaux de butée (35) de longueurs axiales différentes, qui sont reliés au tambour de confectionnement (5) en étant mutuellement interchangeables.

4. Machine selon les revendications 1 à 3, caractérisée en ce que les fourreaux de butée (35) sont dimensionnés en longueur de telle sorte que leur surface frontale libre coïncide dans l'essentiel respectivement avec le plan de délimitation marginale extérieure des segments périphériques (25) du tambour de confectionnement (5) correspondant.

**Claims**

1. Tyre-building machine, having a building drum (5), which is interchangeably mounted on a drive shaft (4), and operating and controlling means (6, 7, 8), which are supported on the front end faces of said drum, characterised in that the building drum (5) is provided at each end with the stop sleeves (35), which absorb the supporting forces of the operating and controlling means (6, 7, 8).

2. Machine according to claim 1, characterised in that the stop sleeves (35) are non-rotatably connected to the building drum (5) in concentric disposition relative to the drive shaft (4).

3. Machine according to claims 1 and 2, characterised in that stop sleeves (35) of different axial lengths are provided and are interchangeable with one another in association with the building drum (5).

4. Machine according to claims 1 to 3, characterised by the stop sleeves (35) being so dimensioned lengthwise that each of their free end faces substantially coincides with the outer edge boundary plane of the circumferential segments (25) of the associated building drum (5).

FIG. 1

FIG. 2